# EUROPÄISCHE PATENTANMELDUNG

(11) **EP 4 822 201 A1**
(43) Veröffentlichungstag der Anmeldung: **14.10.2026**
(21) Anmeldenummer: 26160320.3
(22) Anmeldetag: 24.02.2026
(51) Int. Cl.: F16D 51/10, F16D 65/22, F16D 65/62

(54) **TROMMELBREMSE**

(30) Priorität: 10.04.2025 DE 102025114202
(71) Anmelder: KB Intellectual Property GmbH & Co. KG, 82049 Pullach (DE)
(72) Erfinder: Weber, Ralf, 80997 München (DE); Iraschko, Johann, 85301 Schweitenkirchen (DE); Schröpf, Frederic, 94469 Deggendorf (DE); Fischer, Rudolf, 85435 Erding (DE)

(57) **Zusammenfassung**

Eine Trommelbremse (1), insbesondere für ein Nutzfahrzeug, umfasst eine um eine Drehachse (2a) drehbar gelagerte Bremstrommel (2), mehrere in einem Aufnahmeraum der Bremstrommel (2) gelagerte Bremsbacken mit einem jeweiligen Reibbelagträger und einem an diesem angeordneten Reibbelag, einen Verschleißnachsteller (8) zur Erfassung und zum Ausgleich eines vergrößerten Lüftspiels. Die Trommelbremse (1) weist einen Lüftspielverstellmechanismus (10) auf, welcher den Verschleißnachsteller (8) und eine mit dem Verschleißnachsteller (8) gekoppelte temperaturabhängige Korrektureinrichtung (100) umfasst, wobei die temperaturabhängige Korrektureinrichtung (100) das Lüftspiel entsprechend einer Temperatur von Komponenten der Trommelbremse (1) korrigiert.

## Beschreibung

Die vorliegende Erfindung betrifft eine Trommelbremse, insbesondere für ein Nutzfahrzeug, gemäß dem Oberbegriff des Anspruchs 1.

Nutzfahrzeuge sind in der Regel mit pneumatisch betätigten Trommel- oder Scheibenbremsen ausgerüstet.

Gattungsgemäße Trommelbremsen weisen einen zylindertrommelförmigen Rotor auf, der als Bremstrommel bezeichnet wird. An der Innenseite dieser Bremstrommel sind Reibflächen angeordnet. Eine Bremskraft wird dabei mit Bremsbacken generiert, die gegen die innenliegende Reibfläche der Bremstrommel gedrückt werden.

In den letzten Jahren gab es bei modernen Nutzfahrzeugen eine deutliche Tendenz zur pneumatisch betätigten Scheibenbremse. 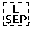 Aufgrund von verschärften Anforderungen hinsichtlich der Vermeidung von Feinstaubemissionen ist auch die Trommelbremse wieder eine interessante Alternative. Da es sich bei der Trommelbremse praktisch um eine geschlossene Bremse - die Reibpaarung befindet sich im Innenraum der Bremse - handelt, ist es einfacher, den Bremsenabrieb zu binden und in der Bremse zu deponieren.

Als einfachste und derzeit häufig verwendete Ausführung einer Trommelbremse ist die sogenannte Simplex-Trommelbremse zu benennen. Bei dieser werden zwei Bremsbacken durch eine einseitig an den Bremsbacken wirkende Zuspannvorrichtung hydraulisch oder mechanisch an die Trommel gedrückt, beispielsweise mithilfe eines Nockens, eines Spreizschlosses, Spreizkeils oder Spreizhebels.

Das Dokument WO2022/2633324A1 beschreibt eine neuartige Trommelbremse, welche im Gegensatz zu herkömmlichen Trommelbremsen u. a. auch eine integrierte Aktuatorik aufweist.

Es ist zudem für diese Trommelbremse ein mechanisch wirkender, in die Bremse integrierter Verschleißnachsteller vorgestellt worden.

Die Wirkungsweise dieses Verschleißnachstellers ist monodirektional, d.h. der Nachsteller kann durch sein Funktionsverhalten nur zu große Lüftspiele korrigieren, nicht jedoch zu kleine Lüftspiele.

Unter dem Begriff "Lüftspiel" ist der Abstand des Reibbelags (einer Bremsbacke) zur Reibfläche der Bremstrommel im nicht betätigten Zustand zu verstehen. Zur Gewährleistung einer zuverlässigen Funktion der Bremse ist ein Lüftspiel von etwa 0,6mm vorteilhaft.

Nach heutigem Stand der Technik besteht bei Trommelbremsen für Nutzfahrzeuge die Problematik, dass bei steigender Temperatur der Bremstrommel diese sich durch die so genannte Schirmung der Bremstrommel vom Bremsbelag wegbewegt.

Normalerweise sind Trommelbremsen mit einem Gestängesteller ausgerüstet, um den Verschleiß der Reibpaarung von Bremsbelag und Reibfläche an der Innenwand der Bremstrommel über deren Betriebszeit auszugleichen. Dabei ist dieser mit einem sogenannten konstruktiven Lüftspiel ausgestattet.

Dieses konstruktive Lüftspiel ist ein Freilauf, innerhalb dessen der Gestängesteller nicht nachstellt, so dass zu jedem Zeitpunkt ein Mindestspalt zwischen den Kontaktflächen von Bremsbelag und Bremstrommel besteht (Lüftspiel).

Mit der Wechselwirkung zwischen konstruktiven Lüftspiel und der steigenden, so genannten Schirmung der Bremstrommel mit zunehmender Temperatur der Bremstrommel entsteht das Problem, dass das reale Lüftspiel immer größer wird. In diesem Fall überschreitet der Gestängesteller bei Betätigung der Bremse das konstruktive Lüftspiel und beginnt nachzustellen. Dadurch besteht die Gefahr, dass bei Beendigung des Bremszyklus die Bremstrommel wieder abkühlt, auf die Bremsbeläge schrumpft und somit das Rad blockiert.

Nach jetzigem Stand der Technik wird dieses Problem dadurch gelöst, dass Gestängesteller sehr langsam nachstellen. Dies soll verhindern, dass bei sogenannten Heißabfahrten, also bei sehr hochfrequenter Taktung der Bremse, das Lüftspiel komplett zugestellt wird.

Damit nimmt man jedoch in Kauf, dass u. U. hoher Belagverschleiß, aufgrund der geringen Nachstellgeschwindigkeit, nicht schnell genug kompensiert wird.

So könnte es vorkommen, dass bei hoher Bremsenbeanspruchung der dabei auftretende Belagverschleiß und die thermische Trommelausdehnung zu einem zu großem Lüftspiel führen und damit eine Hubreserve des Aktuators nicht mehr ausreichend ist. Die Folge wäre eine erhebliche Beeinträchtigung der Bremsleistung und somit der Verkehrssicherheit des Fahrzeugs.

Um dies zu vermeiden, wird bei konventionellen Trommelbremsen die Nachstellgeschwindigkeit so gering eingestellt, dass die im Verhältnis kurzfristige Trommelausdehnung nicht bzw. kaum ausgeglichen wird.

Die Aufgabe der vorliegenden Erfindung besteht darin, eine verbesserte Trommelbremse mit einem verbesserten Verschleißnachsteller unter Einbeziehung einer Temperatur der Bremstrommel zu schaffen.

Diese Aufgabe wird durch eine Trommelbremse mit den Merkmalen des Anspruchs 1 gelöst.

Weitere vorteilhafte Ausbildungen der Erfindung sind den Unteransprüchen zu entnehmen.

Eine erfindungsgemäße Trommelbremse, insbesondere für ein Nutzfahrzeug, umfasst eine um eine Drehachse drehbar gelagerte Bremstrommel, mehrere in einem Aufnahmeraum der Bremstrommel gelagerte Bremsbacken mit einem jeweiligen Reibbelagträger und einem an diesem angeordneten Reibbelag, einen Verschleißnachsteller zur Erfassung und zum Ausgleich eines vergrößerten Lüftspiels. Die Trommelbremse weist einen Lüftspielverstellmechanismus auf, welcher den Verschleißnachsteller und eine mit dem Verschleißnachsteller gekoppelte temperaturabhängige Korrektureinrichtung umfasst, wobei die temperaturabhängige Korrektureinrichtung das Lüftspiel entsprechend einer Temperatur von Komponenten der Trommelbremse korrigiert.

Ein bedeutender Vorteil hierbei ist es, dass es verhindert wird, dass bei steigender Temperatur von Komponenten der Trommelbremse der Nachsteller zu einem Zeitpunkt nachstellt, bei dem die Möglichkeit bestünde, dass das konstruktive Lüftspiel bei abkühlender Bremstrommel bis zum Kontakt von Bremsbelag und Bremstrommel unterschritten wird.

In einer Ausführung ist vorgesehen, dass die temperaturabhängige Korrektureinrichtung das Lüftspiel mit einem üblichen Wert aus einer Normalstellung des Lüftspielverstellmechanismus bei normaler Temperatur von Komponenten der Trommelbremse derart bei steigender Temperatur korrigiert, dass das Lüftspiel des Lüftspielverstellmechanismus bei gestiegener Temperatur vergrößert ist und bei Rückgang der Temperatur wieder den üblichen Wert in der Normalstellung des Lüftspielverstellmechanismus einnimmt.

Unter dem Begriff "normale Temperatur" sind hier Temperaturen < 200° C zu verstehen.

Hierbei ist es vorteilhaft, dass das Lüftspiel in Abhängigkeit von der Temperatur von Komponenten der Trommelbremse verstellt werden kann. Die Temperatur kann vorteilhaft direkt an den Stellen der Trommelbremse mit dem höchsten Temperaturniveau abgeleitet werden.

In einer Ausführung ist es von Vorteil, wen die temperaturabhängige Korrektureinrichtung das Lüftspiel stufenweise in mindestens zwei Stufen korrigiert, da hier mit einem geringen Aufwand ein positives Ergebnis erzielt werden kann. Natürlich sind auch mehr Stufen möglich.

In einer weiteren Ausführung weist die Korrektureinrichtung eine Ventileinheit, einen Hubbegrenzungssteller und eine temperaturabhängige Antriebseinheit auf, wobei die temperaturabhängige Antriebseinheit mit der Ventileinheit derart zusammenwirkt, dass der in Abhängigkeit von der von der Antriebseinheit erfassten Temperatur der Bremstrommel in Kopplung mit dem Verschleißnachsteller das Lüftspiel korrigiert. Ein Vorteil ist es dabei, dass eine Kopplung des Hubbegrenzungssteller mit dem Verschleißnachsteller nur einen geringen Platzbedarf erfordert.

Es ist zudem vorteilhaft, wenn die temperaturabhängige Antriebseinheit eine Temperatur von Komponenten der Trommelbremse, insbesondere eine Temperatur der Bremstrommel, der Trommelbremse erfasst, da diese Komponenten und besonders die Bremstrommel die größte Temperatur führen.

Eine noch weitere Ausführung sieht vor, dass die Ventileinheit mindestens ein Entlüftungsventil, mindestens ein Druckventil und mindestens eine Ventilstange aufweist, wobei die mindestens eine Ventilstange durch das mindestens eine Entlüftungsventil und das mindestens eine Druckventil aus einer Ruheposition in eine Arbeitsposition und wieder zurück verstellbar ist. Mit diesem Aufbau ist eine einfache und zuverlässige Steuerung von Korrekturen des Lüftspiels in Abhängigkeit von der Temperatur der Trommelbremse, d.h. der Bremstrommel, möglich.

In einer anderen Ausführung ist der Hubbegrenzungssteller in einer Stellerführung der Korrektureinrichtung in Richtung des bei Betätigung der Trommelbremse sich mitbewegenden Verschleißnachstellers verschiebbar geführt und nimmt verschiedene Positionen gesteuert durch die mindestens eine Ventilstange der Ventileinheit in Abhängigkeit von der Temperatur der Bremstrommel ein. Damit wird ein vorteilhaft kompakter Aufbau erzielt.

Eine noch weitere Ausführung sieht vor, dass die mindestens eine Ventilstange aus einer Ruheposition, welche die mindestens eine Ventilstange durch die Kraft einer Feder ohne Druckbeaufschlagung durch die Ventileinheit bei einem zugehörigen geöffneten Entlüftungsventil der Ventileinheit einnimmt, unter Druck, den ein zugehöriges geöffnetes Druckventil der Ventileinheit bereitstellt, wobei das Entlüftungsventil der Ventileinheit wieder geschlossen ist, in eine Arbeitsposition gedrückt ist, wenn ein Eingriffsende in eine am Hubbegrenzungssteller eingebrachte Hinterschneidung einrastet, sobald die Hinterschneidung durch Verschiebung des Hubbegrenzungsstellers durch den Verschleißnachsteller deckungsgleich mit der Position der mindestens einen Ventilstange ist. Auf diese Weise ergibt sich eine vorteilhafte platzsparende Anordnung.

Anstelle von Hinterschneidungen können natürlich auch andere Möglichkeiten zum Einsatz kommen, um den Hubbegrenzungssteller in den verschiedenen Positionen zu arretieren, wie z.B. durch die Ventilstangen einziehbaren Anschläge u.dgl.

Es ist vorteilhaft, wenn die mindestens eine Ventilstange aus ihrer Arbeitsposition wieder zurück in ihre Ruheposition verstellt ist, wenn das geöffnete Druckventil der Ventileinheit geschlossen ist und das Entlüftungsventil der Ventileinheit geöffnet ist. So ergeben sich vorteilhaft eindeutige Positionen und Situationen der Korrektureinrichtung.

In einer noch weiteren Ausführung weist die Ventileinheit einen verschiebbar geführten Steuerschieber auf, welcher von der temperaturabhängigen Antriebseinheit betätigt das mindestens eine Entlüftungsventil und das mindestens eine Druckventil aus einer jeweiligen verschlossenen Stellung in eine jeweilige geöffnete Stellung und zurück verstellt. Ein Vorteil dabei ergibt sich aus einem kompakten Aufbau.

Es ist dabei weiterhin vorteilhaft, wenn das mindestens eine Entlüftungsventil und das mindestens eine Druckventil der Ventileinheit in Zusammenwirkung mit Nuten und Ringabschnitten des Steuerschiebers verstellbar sind, da ein solcher Steuerschieber als eine Art Stange mit kreisförmigem Querschnitt leicht herzustellen ist, wobei seine Aufnahme in einem Gehäuse der Korrektureinrichtung ebenfalls einfach zu fertigen ist.

In einer Ausführung entlüftet das mindestens eine Entlüftungsventil einen Stangenraum des Stangenventils in die Außenatmosphäre, und das mindestens eine Druckventil ist eingangsseitig mit einem Anschluss für eine Druckluftversorgung der Feststellbremse der Trommelbremse verbunden. Dies ist besonders vorteilhaft, da eine Druckluftversorgung an der Trommelbremse vorhanden ist und keine Neuinstallation erforderlich wird.

Eine weitere Ausführung sieht vor, dass die temperaturabhängige Antriebseinheit mit einem Thermoschalter in Form eines Bimetallstreifens oder/und mit einem Expansionsstab ausgebildet ist, wobei der Thermoschalter oder/und der Expansionsstab mit dem Steuerschieber gekoppelt ist/sind. Diese Bauteile sind kostengünstig und in hoher Qualität erhältlich.

In einer alternativen Ausführung umfasst die temperaturabhängige Antriebseinheit zumindest einen Temperatursensor, welcher die aktuelle Temperatur von Komponenten der Trommelbremse, insbesondere die aktuelle Temperatur der Bremstrommel, erfasst, und ein elektrisches Stellglied, z.B. einen Elektromagneten, welches den Steuerschieber verstellt, und eine entsprechende Steuerung zur Verarbeitung gemessener Temperaturwerte der Bremstrommel des Temperatursensors und zur Betätigung des elektrischen Stellgliedes des Steuerschiebers. Hierbei können vorteilhaft übliche Bauteile mit hoher Qualität zum Einsatz kommen. Zudem ergibt sich der Vorteil, dass die erfasste aktuelle Temperatur der Trommelbremse in relativ einfacher Weise auch an eine übergeordnete Auswerte-/Überwachungseinheit weitergeleitet werden kann, z.B. über eine drahtlose (Funk) Übertragungsstrecke.

Es ergeben sich folgende Vorteile der Erfindung.
- Es ist mindestens ein dreistufiges Lüftspiel möglich.
- Eine Energieversorgung ist über den Druckluftanschluss der Feststellbremse möglich.
- Temperaturerfassung kann direkt an den Stellen mit dem höchsten Temperaturniveau erfolgen.
- Alternativ kann die Ventileinheit über einen Temperatursensor elektrisch gesteuert ausgeführt sein.

Ein Ausführungsbeispiel der Erfindung wird nachfolgend anhand der beigefügten Zeichnungen beschrieben. Die Erfindung ist nicht auf dieses Ausführungsbeispiel beschränkt. Insbesondere sind einzelne Merkmale des nachfolgenden Ausführungsbeispiels nicht nur bei diesem, sondern auch bei anderen Ausführungsbeispielen einsetzbar. Es zeigen:
- Fig. 1: eine schematische Perspektivansicht eines Ausführungsbeispiels einer erfindungsgemäßen Trommelbremse mit einem Lüftspielverstellmechanismus;
- Fig. 2: eine schematische axiale Schnittansicht der erfindungsgemäßen Trommelbremse in einer Ebene eines Verschleißnachstellers des Lüftspielverstellmechanismus und eine Korrektureinrichtung des Lüftspielverstellmechanismus;
- Fig. 3: eine Ausschnittvergrößerung des Verschleißnachstellers des Lüftspielverstellmechanismus nach Fig. 2;
- Fig. 4: eine schematische Explosionsdarstellung der Korrektureinrichtung des Lüftspielverstellmechanismus;
- Fig. 5-7: schematische Schnittansichten eines ersten Ventilabschnitts mit verschiedenen Ventilstellungen der Korrektureinrichtung nach Fig. 4 durch eine Ebene eines Steuerschiebers senkrecht zu einer Ebene in Längsrichtung einer Drehachse der Trommelbremse;
- Fig. 8-10: schematische Schnittansichten eines Stangenabschnitts der Korrektureinrichtung nach Fig. 4 in verschiedenen Steuerstellungen durch eine Ebene von Rotationsachsen von Ventilstangen; und
- Fig. 11-13: schematische Schnittansichten eines zweiten Ventilabschnitts der Korrektureinrichtung nach Fig. 4 in verschiedenen Ventilstellungen durch eine Ebene des Steuerschiebers, die durch eine Ebene in Längsrichtung der Drehachse der Trommelbremse verläuft.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trommelbremse, Bremstrommel, Bremsbacke und zugehörige Funktionselemente, Funktionseinheiten und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

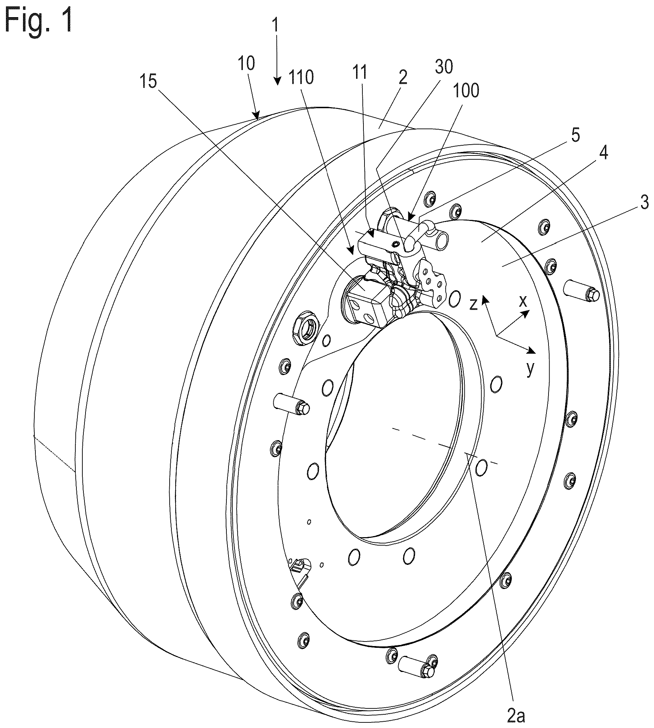

**Figur 1** zeigt eine schematische Perspektivansicht eines Ausführungsbeispiels einer erfindungsgemäßen Trommelbremse 1 mit einem Lüftspielverstellmechanismus 10.

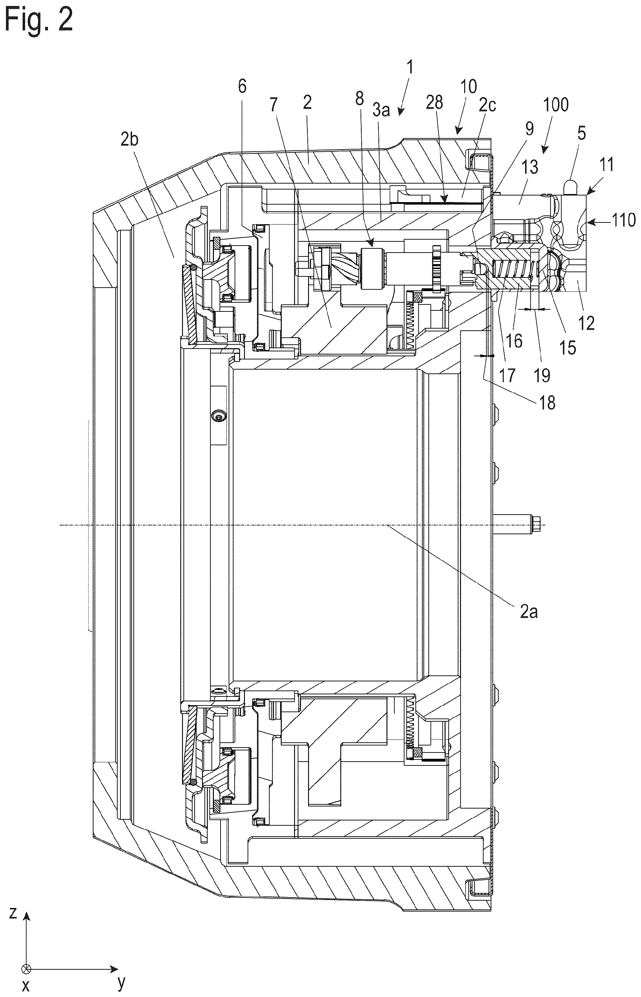

**Figur 2** stellt eine schematische axiale Schnittansicht der erfindungsgemäßen Trommelbremse 1 in einer Ebene eines Verschleißnachstellers 8 des Lüftspielverstellmechanismus 10 und eine Korrektureinrichtung 100 des Lüftspielverstellmechanismus 10 dar.

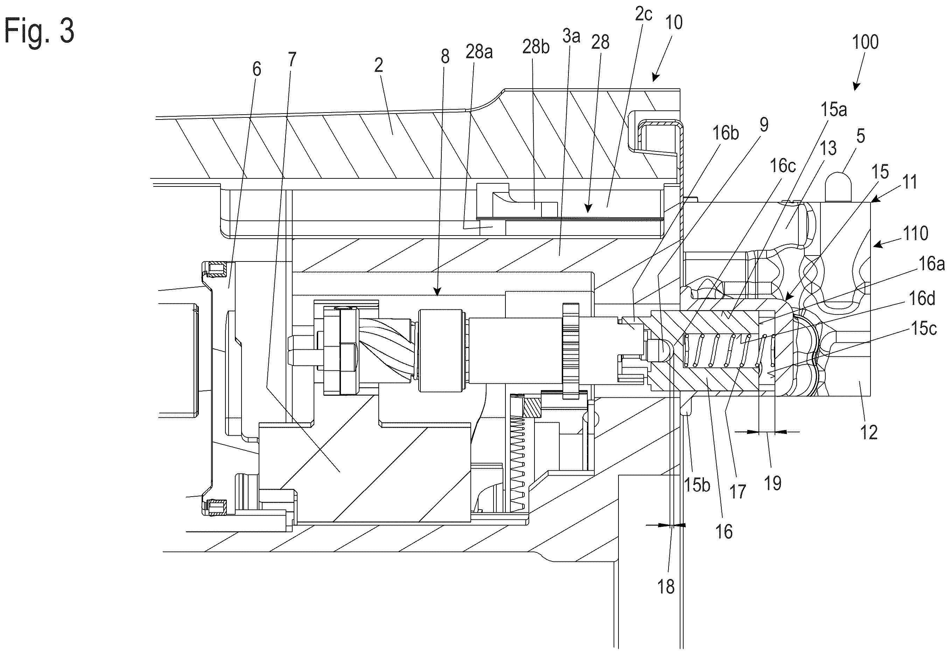

In **Figur 3** ist eine Ausschnittvergrößerung des Verschleißnachstellers 8 und eines Stellerabschnitts 15 einer Korrektureinrichtung 100 des Lüftspielverstellmechanismus 10 nach Fig. 2 gezeigt.

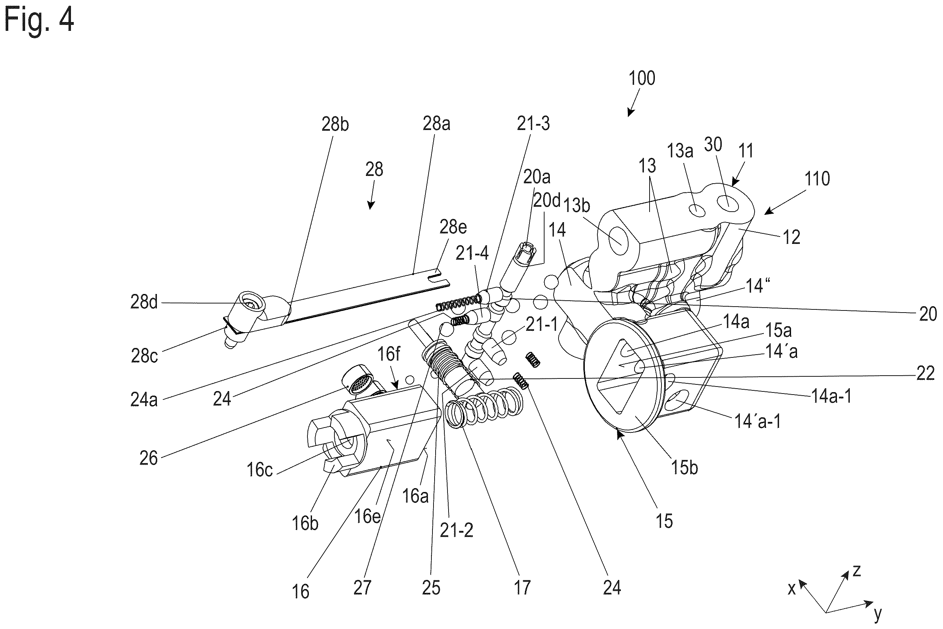

**Figur 4** ist eine schematische Explosionsdarstellung der Korrektureinrichtung 100 des Lüftspielverstellmechanismus 10 nach Fig. 2.

Die Trommelbremse 1 umfasst eine um eine Drehachse 2a drehbar gelagerte Bremstrommel 2, einen Bremsträger 3, einen Anschluss 4 für eine Druckluftversorgung einer Feststellbremse der Trommelbremse 1 und einen Lüftspielverstellmechanismus 10 mit einem Verschleißnachsteller 8 (Fig. 2) und einer Korrektureinrichtung 100.

Zur besseren Orientierung dienen Ortskoordinaten x, y, z. Dabei verläuft die y-Achse parallel zu der Drehachse 2a der Bremstrommel 2. Die z-Achse verläuft parallel zu einer Längsrichtung einer gedachten Längsachse eines Steuerschiebers 20 (z.B. Fig. 4), die y-Achse verläuft parallel zu einer gedachten Längsachse eines Hubbegrenzungsstellers 16 (z.B. Fig. 4), und die x-Achse verläuft parallel zu gedachten Längsachsen von Ventilstangen 22, 22' (z.B. Fig.4). Diese Funktionsbauteile werden unten noch im Einzelnen ausführlich beschrieben.

In einem Raum 2b radial innerhalb der Bremstrommel 2 sind mehrere gelagerte Bremsbacken (nicht gezeigt, aber leicht vorstellbar) mit einem jeweiligen Reibbelagträger und einem an diesem befestigten Reibbelag angeordnet.

Die Bremsbacken sind zur Ausübung eines Bremsvorgangs radial zu der Drehachse 2a der Bremstrommel 2 an eine als Reibfläche ausgebildete Mantelinnenfläche der Bremstrommel 2 anpressbar.

Zur Durchführung dieser radialen Anpressbewegung der Bremsbacken an die Mantelinnenfläche der Bremstrommel 2 dient ein in dem Raum 2b der Bremstrommel 2 an einem Ankergehäuse drehfest angeordneter Druckstempel (nicht gezeigt, aber leicht vorstellbar).

Die Trommelbremse 1 weist den Lüftspielverstellmechanismus 10 auf, welcher einen Verschleißnachsteller 8 und eine mit dem Verschleißnachsteller 8 gekoppelte Korrektureinrichtung 100 umfasst.

Die Korrektureinrichtung 100 weist eine Ventileinheit 110 mit einem Gehäuse 11, den Hubbegrenzungssteller 16 und eine Antriebseinheit 28 auf. Die Korrektureinrichtung 100 hat die Funktion, ein zusätzlich verfügbares konstruktives Lüftspiel bei steigender Temperatur der Trommelbremse 1 zu erzeugen, welches das konstruktive Lüftspiel, das bei Rautemperatur vorherrscht, vergrößert. Dies wird unten noch im Detail erläutert.

Ohne Korrekturmaßnahme durch die Korrektureinrichtung 100 würde es bei einer Erwärmung der Bremstrommel 2 und in Kombination mit einer häufigen Betätigung der Trommelbremse 1 zu der Situation kommen, in welcher die radiale thermische Ausdehnung der Bremstrommel 2 gleich oder größer als das konstruktive Lüftspiel wäre, und es könnte dann bei der Abkühlung zum Aufschrumpfen der Bremstrommel 2 auf die Bremsbeläge 5 kommen.

Dieser unakzeptable Betriebszustand muss unter allen Umständen vermieden werden. Durch eine von der Temperatur der Trommelbremse 1 bzw. der Bremstrommel 2 abhängige Anpassung des Lüftspiels mittels der Korrektureinrichtung 100 kann dies erreicht werden.

Die Trommelbremse 1 verfügt über eine integrierte Brems-Aktuatorik mit einem zur Kraftverstärkung und -umlenkung dienenden Keilmechanismus 7, der hier nicht näher dargestellt ist.

Der Verschleißnachsteller 8 ist mit einem innenliegenden Ende in nicht näher beschriebener Weise mit dem Keilmechanismus 7 verbunden. Das andere Ende des Verschleißnachstellers 8 ist in einer Öffnung des Bremsträgers 3 angeordnet und mit einem Koppelabschnitt 16b des Hubbegrenzungsstellers 16 der Korrektureinrichtung 100 derart gekoppelt, dass Relativbewegungen von dem Verschleißnachsteller 8 und dem Hubbegrenzungssteller 16 in axialer Richtung parallel zu der Drehachse 2a der Bremstrommel 2 ermöglicht sind.

Dabei ist ein Stößel 9 des Verschleißnachstellers 8 in einer Aufnahme 16c des Hubbegrenzungsstellers 16 der Korrektureinrichtung 100 aufgenommen. Der Stößel 9 weist eine Kontaktfläche auf.

Ein Abstand zwischen der Kontaktfläche des Stößels 9 des Verschleißnachstellers 8 und dem Boden der Aufnahme 16c des Hubbegrenzungsstellers 16 der Korrektureinrichtung 100 wird hier als konstruktives Lüftspiel 18 bezeichnet, das bereits oben erwähnt ist.

Der Hubbegrenzungssteller 16 ist ein quaderähnlicher Block mit einer ersten schmalen Stirnseite 16a und einer zweiten Stirnseite mit dem Koppelabschnitt 16b und der Aufnahme 16c aufweist. Von der ersten Stirnseite 16a ist eine zentrale Öffnung 16d (Sackbohrung) in den Körper des Hubbegrenzungsstellers 16 eingeformt, die eine Aufnahme für ein Kraftspeicherelement 17, hier eine Druckfeder, bildet.

Der Hubbegrenzungssteller 16 ist in einer zu seiner Form korrespondierenden Stellerführung 15a in Richtung der Drehachse 2a der Bremstrommel 2 y-Richtung verschiebbar geführt angeordnet. Das Kraftspeicherelement 17 ist zum größten Teil in der Öffnung 16d des Hubbegrenzungsstellers 16 eingesetzt und steht mit einem Ende mit dem Boden dieser Öffnung 16d in Kontakt. Das andere Ende des Kraftspeicherelementes 17 stützt sich an einer Bodenwand 15c der Stellerführung 15a ab und drückt den Hubbegrenzungssteller 16 gegen den Verschleißnachsteller 8.

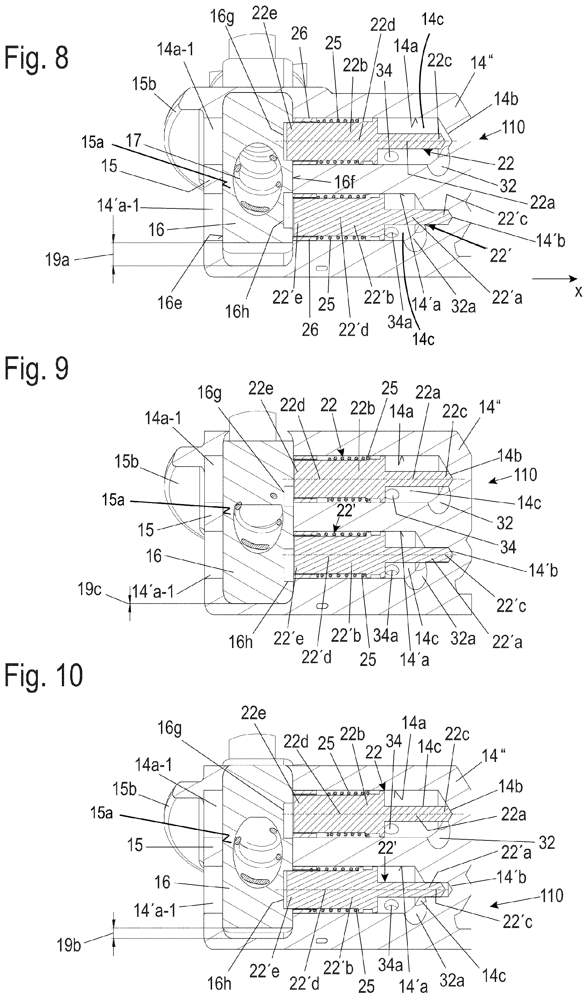

Der Hubbegrenzungssteller 16 weist zudem zwei parallele großflächige Seitenflächen 16e und 16f auf (Fig. 4), von denen eine, nämlich die Seitenfläche 16f, zu einem Stangenabschnitt 14" der Ventileinheit 110 weist. In diese Seitenfläche 16f sind zwei Hinterschneidungen 16g und 16h eingeformt, welche hier kreiszylinderförmig ausgebildet sind (siehe Fig. 8, 9, 10). Ihre Funktion wird unten noch näher erläutert.

Ein Abstand 19 zwischen einer der Aufnahme 16c gegenüberliegenden Stirnwand 16a des Hubbegrenzungsstellers 16 und der Bodenwand 15c der Stellerführung 15a des Stellerabschnitts 15 des Gehäuses 11 der Ventileinheit 110 der Korrektureinrichtung 100 wird hier als verfügbares Zusatzlüftspielmaß bezeichnet.

Der Abstand 19 bildet den verfügbaren Längenwert, um den das konstruktive Lüftspiel 18 bei steigender Temperatur der Bremstrommel 2 maximal (konstruktiv bedingt) vergrößert werden kann.

Dazu kann der Hubbegrenzungssteller 16 in seiner Stellerführung 15a in verschiedenen Positionen arretiert werden. Die verschiedenen Positionen des Hubbegrenzungsstellers 16 entsprechen verschiedenen Werten des Abstands 19. In dem beschriebenen Ausführungsbeispiel ist die Arretierung zweistufig ausgeführt. Sie kann natürlich auch mit mehr als zwei Stufen oder auch stufenlos realisiert werden.

In Fig. 3 ist der Abstand 19 zwischen der Stirnwand 16a des Hubbegrenzungsstellers 16 und der Bodenwand 15c der Stellerführung 15a maximal, und das konstruktive Lüftspiel 18 weist seinen üblichen Wert bei Umgebungstemperatur (auch Raumtemperatur genannt) auf. Bei steigender Temperatur wird der Abstand 19 reduziert und das konstruktive Lüftspiel 18 um den reduzierten Wert des Abstands 19 vergrößert. Ist die Temperatur auf einen maximalen Wert gestiegen, ist der Abstand 19 zu Null geworden, wobei das konstruktive Lüftspiel 18 um den maximalen Wert des Abstands 19 vergrößert ist.

Die Einstellung des Abstandes 19 zwischen der Stirnwand 16a des Hubbegrenzungsstellers 16 und der Bodenwand 15c der Stellerführung 15a erfolgt von der Korrektureinrichtung 100 durch entsprechende Arretierungen des Hubbegrenzungsstellers 16 in seiner Längsrichtung, die parallel zu der Drehachse der Bremstrommel 2 und in Längsrichtung des Verschleißnachstellers 8 verläuft.

Die Arretierungen werden durch die Ventileinheit 110 der Korrektureinrichtung 100 in Abhängigkeit von der Temperatur der Trommelbremse 1 bzw. der Bremstrommel 2 vorgenommen.

Die Arretierungen werden unten weiter im Zusammenhang mit Fig. 8 bis 10 noch detaillierter beschrieben.

Im Folgenden wird die Ventileinheit 110 der Korrektureinrichtung 100 ausführlich beschrieben.

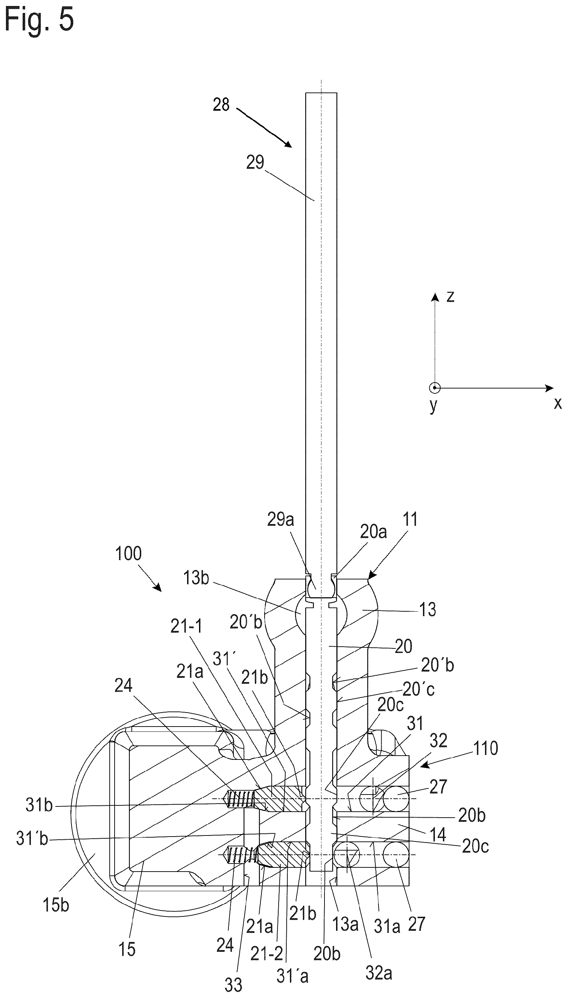

Fig. 5-7 zeigen schematische Schnittansichten mit verschiedenen Ventilstellungen eines ersten Ventilabschnitts der Korrektureinrichtung 100 nach Fig. 4 durch eine Ebene eines Steuerschiebers 20 senkrecht zu einer Ebene in Längsrichtung der Drehachse 2a der Trommelbremse 1.

Fig. 8-10 stellen schematische Schnittansichten eines Stangenabschnitts 14" der Korrektureinrichtung 100 nach Fig. 4 in verschiedenen Ventilstellungen durch eine Ebene von Rotationsachsen 22d, 22'd von Ventilstangen 22, 22' dar.

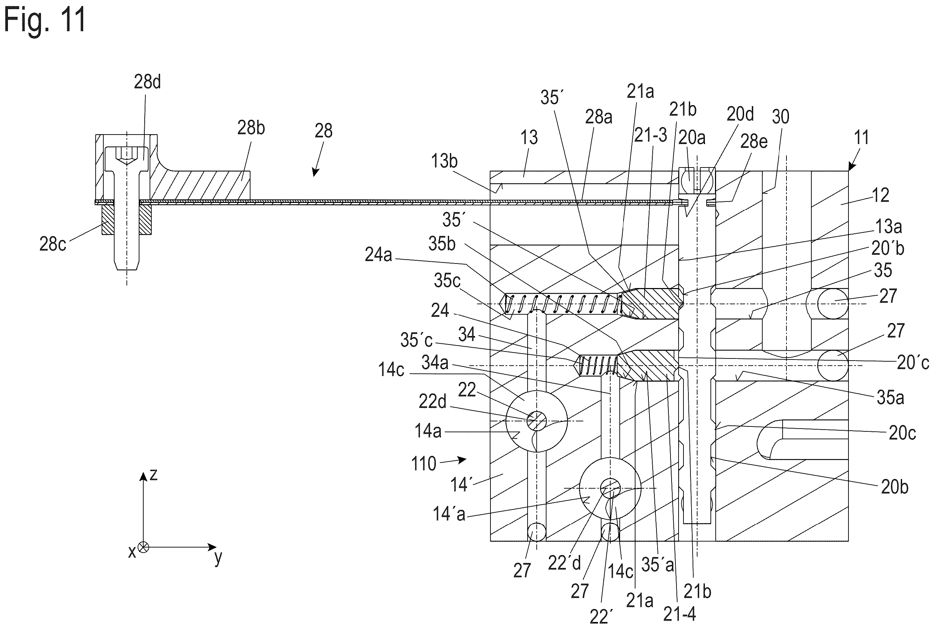

In Fig. 11-13 sind schematische Schnittansichten eines zweiten Ventilabschnitts der Korrektureinrichtung nach Fig. 4 in verschiedenen Stellungen der Ventilstangen 22, 22' durch eine Ebene des Steuerschiebers 20, die durch eine Ebene in Längsrichtung der Drehachse 2a der Trommelbremse 1 verläuft.

Das Gehäuse 11 der Ventileinheit 110 der Korrektureinrichtung 100 umfasst einen Versorgungsabschnitt 12 mit einem Eingangsluftkanal 30, einen Antriebsabschnitt 13 mit einer Schieberbohrung 13a mit einem darin verschiebbar geführten Steuerschieber 20 und einer Antriebsbohrung 13b, einen ersten Ventilabschnitt 14 mit zwei Entlüftungsventilen 21-1, 21-2 (Fig. 5-7), eine zweiten Ventilabschnitt 14' mit zwei Druckventilen 21-3, 21-4 (Fig. 11-13) und einen Stangenabschnitt 14" mit zwei Ventilstangen 22, 22' sowie den Stellerabschnitt 15 mit dem Hubbegrenzungssteller 16.

Das Gehäuse 11 der Ventileinheit 110 weist bei in dem vorliegenden Ausführungsbeispiel neben einer zweistufigen Arretierung mittels der Ventilstangen 22, 22' für die Positionen des Hubbegrenzungsstellers 16 (Abstand 19) im Wesentlichen sechs Luftkanäle auf, in denen die Entlüftungsventile 21-1, 21-2, die Druckventile 21-3, 21-4 und die Ventilstangen 22, 22' verschiebbar gelagert sind. Die zur Arretierung des Hubbegrenzungsstellers 16 verwendeten Ventilstangen 22, 22' sind mit zugehörigen Federn 25 in Bohrungen 14a, 14'a des Stangenabschnitts 14" verschiebbar geführt. Jede Feder 25 übt eine Druckkraft auf eine jeweilige Ventilstange 22, 22' derart aus, dass die jeweilige Ventilstange 22, 22' ohne Druckbeaufschlagung durch die Ventileinheit 110 in einer Ruheposition steht. Dies wird unten noch weiter erläutert.

Den Öffnungen der Bohrungen 14a, 14'a liegen Montageöffnungen 14a-1, 14'a-1 in der Wand des Stellerabschnitts 15 gegenüber, die zur Montage, d.h. zum Einsetzen der Ventilstangen 22, 22' in die Bohrungen 14a, 14'a dienen. Dies ist beim Zusammenbau möglich, wenn der Hubbegrenzungssteller 16 noch nicht eingebaut ist.

Zudem sind Verbindungskanäle 32, 32a; 34, 34a und ein Auslasskanal 33 vorgesehen. Dies wird unten noch ausführlich im Detail beschrieben.

Der Steuerschieber 20 ist in z-Richtung hin- und her verschiebbar angeordnet. Die zwei Entlüftungsventile 21-1 und 21-2 (d.h. ihre Ventilkörper) liegen zusammen mit ihren Entlüftungskanälen 31, 31a; 31', 31'a rechtwinklig dazu in x-Richtung. Die Druckventile 21-3 und 21-4 verlaufen mit ihren Druckkanälen 35, 35'; 35a, 35'a in y-Richtung und die beiden Ventilstangen 22, 22' sind in x-Richtung angeordnet.

Der Steuerschieber 20 ist mit mehreren Nuten 20b, 20'b und Ringabschnitten 20c, 20'c versehen, welche in Abhängigkeit von einer Stellung des Steuerschiebers 20 in seiner Längsrichtung die Entlüftungsventile 21-1, 21-2 und die Druckventile 21-3, 21-4 bewegen, d.h. öffnen und/oder schließen.

Die Nuten 20b, 20'b und Ringabschnitte 20c, 20'c sind in eine untere Gruppe mit den Nuten 20b und Ringabschnitten 20c und in eine obere Gruppe mit den Nuten 20'b und Ringabschnitten 20'c aufgeteilt. Die untere Gruppe der Nuten 20b und Ringabschnitte 20c steht mit den Entlüftungsventilen 21-1, 21-2 in Wirkverbindung, wobei die obere Gruppe der Nuten 20'b und Ringabschnitte 20'c mit den Druckventilen 21-3, 21-4 zusammenwirkt.

Die Bezeichnung "obere Gruppe" und "untere Gruppe" bezieht sich auf die Anordnung der Nuten 20b, 20'b und Ringabschnitte 20c, 20'c in Längsrichtung in positiver z-Richtung des Steuerschiebers 20 in den Figuren 5 bis 7 und 11 bis 13.

Die Entlüftungskanäle 31, 31a sind nach außen hin durch eingepresste Kugeln 27 verschlossen. Die Entlüftungskanäle 31, 31a kommunizieren jeweils über einen Verbindungskanal 32, 32a mit einem Stangenraum 14c einer jeweiligen Bohrung 14, 14a der Ventilstangen 22, 22' (siehe Fig. 8-10).

Weiterhin münden die Entlüftungskanäle 31, 31a in die Schieberbohrung 13a, in welcher sie je nach Stellung des Steuerschiebers 20 blockiert sind oder über die unteren Nuten 20b des Steuerschiebers 20 mit dem jeweiligen gegenüberliegenden Entlüftungskanal 31', 31'a (in x-Richtung), der die Ventilkörper der Entlüftungsventile 21-1, 21-2 aufweist, kommunizieren.

Die Enden der beiden Entlüftungskanäle 31', 31'a weisen jeweils einen Ventilsitz 31b, 31'b auf, der mit einem jeweiligen Ventilkonus 21a der Ventilkörper der Entlüftungsventile 21-1, 21-2 zusammenwirkt. Die Enden der beiden Entlüftungskanäle 31', 31'a kommunizieren mit einem gemeinsamen Auslasskanal 33, der hier in z-Richtung verläuft.

Jeder Ventilkonus 21a kontaktiert mit seinem Ende eine gegenüberliegende Druckfeder 24, welche den jeweiligen Ventilkörper der Entlüftungsventile 21-1, 21-2 gegen den Steuerschieber 20 drückt.

Die Druckkanäle 35, 35a sind nach außen hin ebenfalls wie die Entlüftungskanäle 31, 31a durch eingepresste Kugeln 27 verschlossen. Die Druckkanäle 35, 35a kommunizieren beide mit dem Eingangsluftkanal 30 (siehe Fig. 11-13) und münden in die Schieberbohrung 13a, in welcher sie je nach Stellung des Steuerschiebers 20 blockiert sind oder über die oberen Nuten 20'b des Steuerschiebers 20 mit dem jeweiligen gegenüberliegenden Druckkanal 35', 35'a (in y-Richtung), der die Ventilkörper der Druckventile 21-3, 21-4 aufweist, kommunizieren.

Die Enden der beiden Druckkanäle 35', 35'a weisen jeweils einen Ventilsitz 35b, 35'b auf, der mit einem jeweiligen Ventilkonus 21a der Ventilkörper der Druckventile 21-3, 21-4 zusammenwirkt. Die Enden der beiden Druckkanäle 35', 35'a kommunizieren jeweils mit einem Steuerkanal 34, 34a, die an ihren Enden nach außen hin mit einer Kugel 27 verschlossen sind und jeweils mit dem Stangenraum 14c einer Bohrung 14a, 14'a der Ventilstangen 22, 22' kommunizieren (siehe Fig. 8-10).

Jeder Ventilkonus 21a kontaktiert mit seinem Ende eine gegenüberliegende Druckfeder 24 bzw. 24a, welche den jeweiligen Ventilkörper der Druckventile 21-3, 21-4 gegen den Steuerschieber 20 drückt. Die Ventilfeder 24a, die mit dem Ventilkonus 21a des Ventilkörpers des Druckventils 21-3 zusammenwirkt, ist länger ausgebildet als die Ventilfeder 24, da die zugehörigen Steuerkanäle 34, 34a in y-Richtung einen größeren Abstand aufweisen.

Für die Funktion der Ventileinheit 110 werden hauptsächlich die Komponenten Antriebseinheit 28 zum Antrieb bzw. zur Betätigung des Steuerschiebers 20, mit dem Steuerschieber 20 in Wirkverbindung stehende Ventilteller 21b der Entlüftungsventile 21-1, 21-2 und der Druckventile 21-3, 21-4, und die zur Arretierung des Hubbegrenzungsstellers 16 verwendeten Ventilstangen 22, 22' und der Hubbegrenzungssteller 16 benötigt.

Jede Ventilstange 22, 22' umfasst eine Stange 22a, 22'a, einen Bolzenabschnitt 22b, 22'b, einen Konus 22c, 22'c, eine Rotationsachse 22d, 22'd und ein Eingriffsende 22e, 22'e.

Die Stange 22a, 22'a und der Bolzenabschnitt 22b, 22'b sind in Längsrichtung ihrer Rotationsachse 22d, 22'd verbunden. Das freie Ende der Stange 22a, 22'a ist mit dem Konus 22c, 22'c ausgebildet, wobei das freie Ende des Bolzenabschnitts 22b, 22'b das Eingriffsende 22e, 22'e bildet.

In diesem Beispiel ist ein Außendurchmesser des Bolzenabschnitts 22b, 22'b ist etwa doppelt so groß wie ein Außendurchmesser der Stange 22a, 22'a. Und eine Länge des Bolzenabschnitts 22b, 22'b beträgt in diesem Beispiel etwa das 1,3fache einer Länge der Stange 22a, 22'a.

Die freien Enden der Bolzenabschnitte 22b, 22'b dienen zu einem Eingriff in eine jeweilige Hinterschneidung 16g und 16h des Hubbegrenzungsstellers 16.

Die freien Enden der Stangen 22a, 22'a wirken mit korrespondierenden Konussitzen 14b, 14'b an einem Endabschnitt einer jeweiligen Bohrung 14a, 14'a zusammen und bilden eine Zentrierung für die Ventilstangen 22, 22' im eingefahrenen Zustand bzw. in einer Ruheposition. Diese Ruheposition wird eingenommen, wenn die Stangen 22, 22' ohne Druckbeaufschlagung des Stangenraums 14c im entlüfteten Zustand durch die geöffneten Druckventile/Ventilteller 21-3, 21-4 durch die Federn 25 (Druckfedern) in ihre jeweilige Ruheposition gedrückt sind.

Zur Rückstellung der Entlüftungsventile 21-1, 21-2 und der Druckventile 21-3, 21-4 aus ihren geöffneten Stellungen in ihre geschlossenen Stellungen werden in dem vorliegenden Ausführungsbeispiel Druckfedern 24, 24a verwendet, die in den Luftkanälen bzw. in Federaufnahmen 35c, 35'c angeordnet sind.

Der Eingangsluftkanal 30 ist über eine Versorgungsleitung 5 mit dem Anschluss 4 für die Druckluftversorgung der Feststellbremse der Trommelbremse 1 verbunden (siehe Fig. 1). Auf diese Weise bedient sich die Korrektureinrichtung 100 der bereits vorhanden Druckluftversorgung der Feststellbremse der Trommelbremse 1, da bei dieser im Fahrbetrieb stets der Betriebsdruck der Feststellbremse ansteht.

Die Antriebseinheit 28 ist temperaturabhängig, d.h. abhängig von der Temperatur der Bremstrommel 2. Hier ist die Antriebseinheit 28 in einer Fühleraufnahme 2c zwischen der Mantelinnenfläche der Bremstrommel 2 und einem Wandabschnitt 3a des Bremsträgers 3 angeordnet (siehe Fig. 2, 3).

In diesem Ausführungsbeispiel umfasst die Antriebseinheit 28 einen Thermoschalter 28a, ein Leitblech 28b, eine Isolierhülse 28c und eine Schraube 28d. Der Thermoschalter 28a ist hier als ein Bimetallstreifen ausgebildet. An einem ersten Ende ist der Bimetallstreifen mit einem Leitblech 28b durch die Schraube 28d verbunden, die sich durch einen Dom des Leitblechs 28b nach unten heraus erstreckt. Das untere Ende der Schraube 28d ist mit der Isolierhülse 28c verschraubt.

Das andere Ende des Bimetallstreifens (Thermoschalter 28a) ist gabelförmig und dient als eine steckbare Verbindung mit einer Nut 20d des Steuerschiebers 20 unterhalb eines Koppelabschnitts 20a des Steuerschiebers 20 (siehe auch Fig. 11 bis 13). Dabei erstreckt sich der Bimetallstreifens (Thermoschalter 28a) mit seinem freien, gabelförmigen Ende in einer Antriebsbohrung 13b des Antriebsabschnitts 13 und verstellt in Abhängigkeit von der Temperatur der Bremstrommel 2 den Steuerschieber 20 in seiner Längsrichtung in der Schieberbohrung 13a (Fig. 11 bis 13).

Eine Variante eines Antriebs des Steuerschiebers 20 ist in Fig. 5 in Form eines Expansionsstabs 29 dargestellt. Dieser Expansionsstab 29 ist mit einem Koppelende 29a mit dem Koppelabschnitt 20a des Steuerschiebers 20 verbunden. Der Expansionsstab 29 erstreckt sich radial dicht neben dem Bremsträger 3 (nicht gezeigt, aber leicht vorstellbar) und verändert seine Länge bzw. die Länge eines Abschnitts zur Verstellung des Steuerschiebers 20.

Bei der Variante mit dem Expansionsstab 29 zum Antrieb des Steuerschiebers 20 können 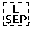 nur sehr kleine Wege des Steuerschiebers 20 realisiert werden, die aufgrund der vorliegenden Toleranzen nicht ausreichend sind. Bei dieser Variante ist daher noch eine Kraft/Weg Übersetzung notwendig, entweder hydraulisch oder mittels einer Keilübersetzung. Diese kann dargestellt werden, da als Aktivierungskraft die Kraft bis zur Knicklast des Expansionsstabs 29 zur Verfügung steht.

Der Steuerschieber 20 selbst wird durch den an ihn angebundenen Thermoschalter 28a bei steigender Temperatur nach unten, d.h. in negativer z-Richtung, gedrückt.

Befindet sich aufgrund der Stellung des Steuerschiebers 20 ein Vorsprung 21b der Ventilteller bzw. Ventile 21-1, 21-2; 21-3, 21-4 in einer Nut 20b, 20'b des Steuerschiebers 20, so wird der Querschnitt des jeweils zugehörigen Luftkanals 31, 31'; 31a, 31'a; 35, 35'; 35a, 35'a geöffnet.

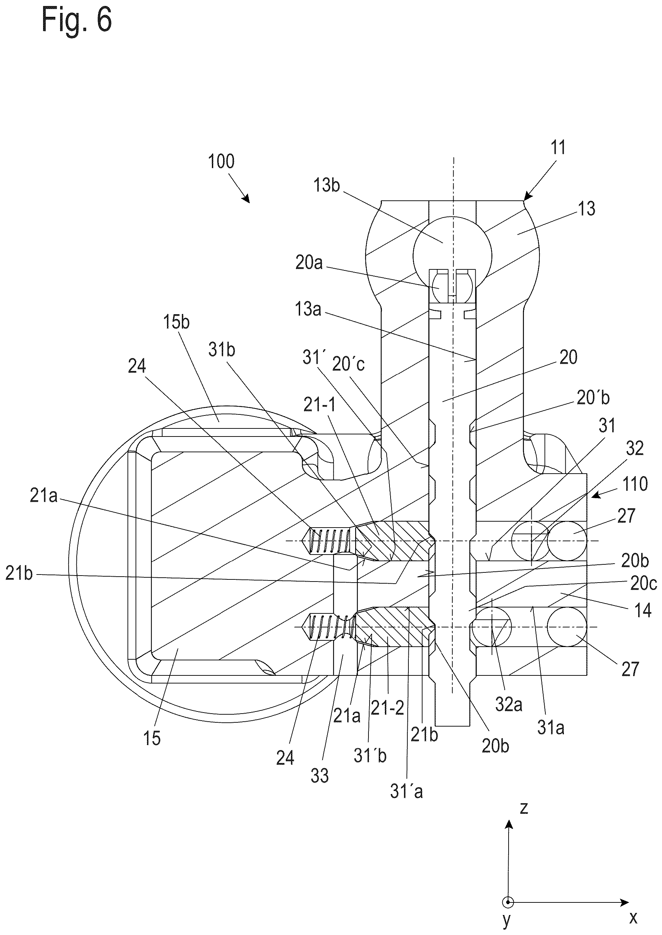

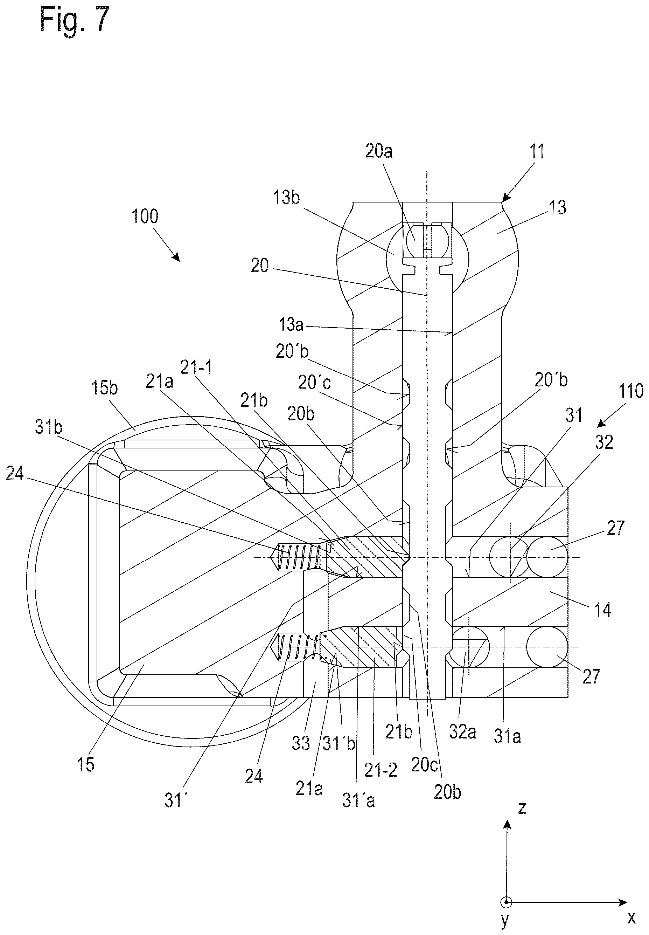

Dies ist in Fig. 5, 6 für das Entlüftungsventil 21-2 und in Fig. 6, 7 für das Entlüftungsventil 21-1 dargestellt. Das Entlüftungsventil 21-1 öffnet, wobei der Stangenraum 14c der zugehörigen Ventilstange 22 (Fig. 8-10) über den Verbindungskanal 32 über den ersten Entlüftungskanal 31, 31' in den Auslasskanal 33 entlüftet wird. Dabei wird das Ventilstange 22 durch seine Feder 25 in die Ruheposition gedrückt, wobei der Konus 22c in dem Konussitz 14b in Eingriff kommt (Fig. 9, 10).

In Fig. 11 ist das Druckventil 21-3 des Druckkanals 35, 35' geöffnet und für den anstehenden Druck aus Anschluss 4 (siehe Fig. 1) der Versorgungsleitung der Feststellbremse in dem Eingangsluftkanal 30 durchlässig. Über den geöffneten Ventilsitz 35b/Ventilkonus 21a des Druckventils 21-3 ist der Eingangsluftkanal 30 mit dem Stangenraum 14c der Ventilstange 22 verbunden. Auf diese Weise ist der Bolzenabschnitt 22b der Ventilstange 22 (Fig. 8) mit dem Druck aus Anschluss 4 beaufschlagt. Der Bolzenabschnitt 22b wird daher in gegenläufige x-Richtung gedrückt. Wenn das Eingriffsende 22e in Eingriff mit der Hinterschneidung 16g des Hubbegrenzungsstellers 16 kommt, sobald die Hinterschneidung 16g durch Verschiebung des Hubbegrenzungsstellers 16 durch den Verschleißnachsteller 8 deckungsgleich mit dem Eingriffsende 22e der Ventilstange 22 ist, ist die jeweilige Ventilstange 22, 22' aus ihrer Ruheposition in ihre Arbeitsposition gedrückt, d.h. das Eingriffsende 22e, 22'e steht aus der Bohrung 14a, 14'a hervor. Dann ist der Abstand 19 auf einen maximalen Abstand 19a wie oben weiter beschrieben einstellt. Das konstruktive Lüftspiel 18 weist seinen üblichen Wert bei Umgebungstemperatur auf. In diesem Fall liegt eine Temperatur der Trommelbremse 1 erfasst durch die Antriebseinheit 28 unter einem Wert von +200° C.

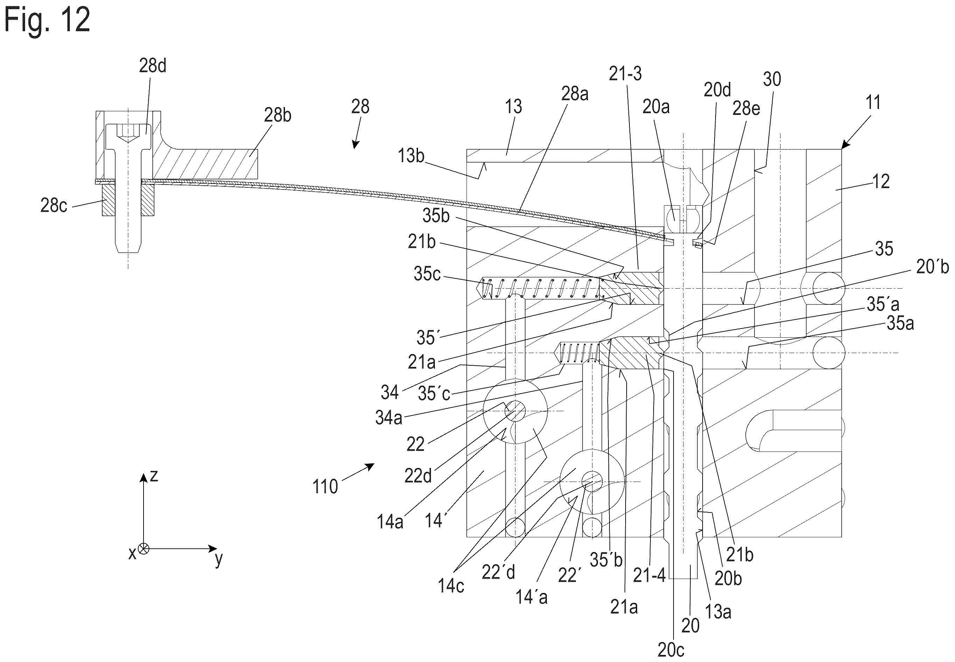

In Fig. 12 sind beide Druckventile 21-3 und 21-4 geschlossen, da ihre Vorsprünge 21b jeweils einen Ringabschnitt 20'c kontaktieren. Damit sind beide Ventilstangen 22, 22' drucklos, d.h. der jeweilige Stangenraum 14c ist entlüftet, und durch ihre Federn 25 in ihre jeweilige Ruheposition verstellt (Fig. 9). Ein Einrasten der Eingriffsenden 22e, 22'e in die Hinterschneidungen 16g, 16h des Hubbegrenzungsstellers 16 erfolgt nicht, da beide Ventilstangen 22, 22' aufgrund ihres entlüfteten Zustands in Ruheposition stehen. Der Hubbegrenzungssteller 16 wird bei Betätigung der Trommelbremse 1 nun durch den Verschleißnachsteller 8 soweit verschoben, bis dass die der Aufnahme 16c gegenüberliegenden Stirnwand 16a des Hubbegrenzungsstellers 16 an der Bodenwand 15c der Stellerführung 15a des Stellerabschnitts 15 des Gehäuses 11 der Ventileinheit 110 der Korrektureinrichtung 100 anliegt.

Dabei ist der Hubbegrenzungssteller 16 auf einen minimalen Abstand 19c eingestellt. Das konstruktive Lüftspiel 18 ist so um den reduzierten Wert des Abstands 19 vergrößert. Ist die Temperatur auf einen maximalen Wert gestiegen (was anhand der Durchbiegung des Thermoschalters 28a zu erkennen ist, ist der Abstand 19 zu Null geworden, wobei das konstruktive Lüftspiel 18 um den maximalen Wert des Abstands 19 vergrößert ist. In diesem Fall liegt eine Temperatur der Trommelbremse 1 erfasst durch die Antriebseinheit 28 über einem Wert von +400° C.

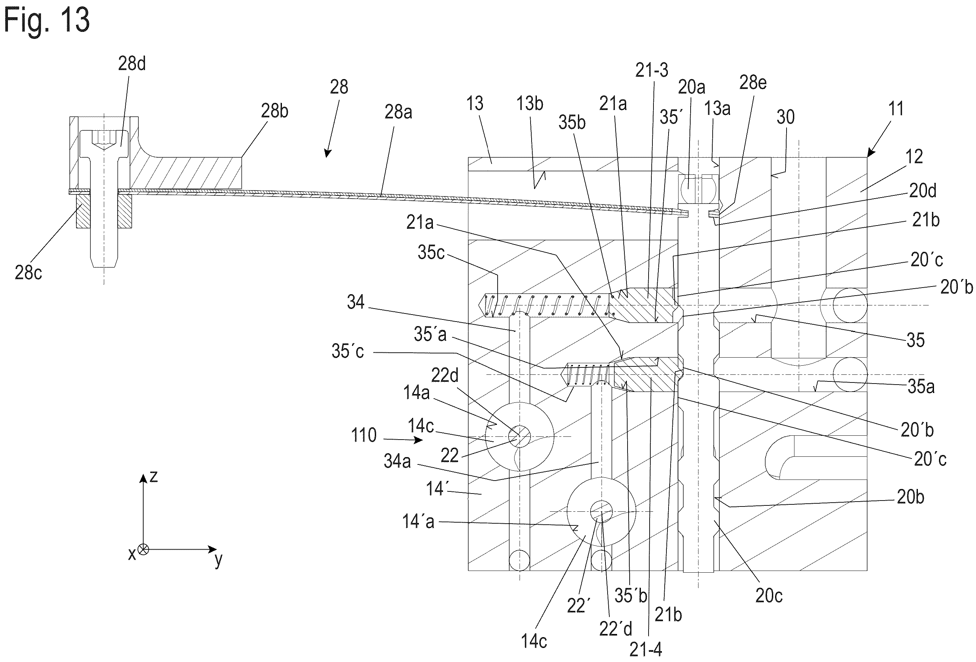

Fig. 13 zeigt die Situation, in welcher das Druckventil 21-4 des Druckkanals 35a, 35'a geöffnet und für den anstehenden Druck aus Anschluss 4 (siehe Fig. 1) der Versorgungsleitung der Feststellbremse in dem Eingangsluftkanal 30 durchlässig. Über den geöffneten Ventilsitz 35'b/Ventilkonus 21a des Druckventils 21-4 ist der Eingangsluftkanal 30 nun mit dem Stangenraum 14c der Ventilstange 22' verbunden. Auf diese Weise ist der Bolzenabschnitt 22'b der Ventilstange 22' (Fig. 10) mit dem Druck aus Anschluss 4 beaufschlagt. Der Bolzenabschnitt 22'b wird daher in gegenläufige x-Richtung nach gedrückt, wobei sein Eingriffsende 22'e in Eingriff mit der Hinterschneidung 16h des Hubbegrenzungsstellers 16 wie oben beschrieben kommt und den Abstand 19 auf einen mittleren Abstand 19b wie oben weiter beschrieben einstellt. Das konstruktive Lüftspiel 18 weist hierbei seinen üblichen Wert bei Umgebungstemperatur auf. Und in diesem Fall liegt eine Temperatur der Trommelbremse 1 erfasst durch die Antriebseinheit 28 in einem Bereich von +200° C bis +400° C.

Der jeweilige Querschnitt ist verschlossen, wenn ein jeweiliger Ringabschnitt 20c, 20'c das zugehörige Ventil 21-1, 21-2; 21-3, 21-4 mit dessen jeweiligem Ventilkonus 21a in dem Entlüftungskanal 31', 31'a bzw. Druckkanal 35', 35'a gegen den zugehörigen Ventilsitz 31b, 31' bzw. 35b, 35'b drückt.

In dem vorliegenden Ausführungsbeispiel sind bei einer zweistufigen Arretierung für die Positionen des Hubbegrenzungsstellers 16 (Abstand 19) drei Stellungen (Arbeitsstellungen) zu beachten:
a) In der ersten Arbeitsstellung, die eine Raumtemperatur bzw. einen Temperaturbereich T < 200° C betrifft, befindet sich der Hubbegrenzungssteller 16 in seiner Grundposition. Das konstruktive Lüftspiel 18 (siehe Fig. 3), d.h. der Abstand zwischen der Kontaktfläche des Stößels 9 des Verschleißnachstellers 8 und dem Boden der Aufnahme 16c des Hubbegrenzungsstellers 16 der Korrektureinrichtung 100 ist der kleinstmögliche.

Dabei steht das Eingriffsende 22e der ersten Ventilstange 22 in Eingriff mit der Hinterschneidung 16g des Hubbegrenzungsstellers 16, wobei das Eingriffsende 22'e der zweiten Ventilstange 22' nicht in Eingriff mit der anderen Hinterschneidung 16h des Hubbegrenzungsstellers 16 steht (siehe Fig. 8).

Der Abstand 19 zwischen der der Aufnahme 16c gegenüberliegenden Stirnwand 16a des Hubbegrenzungsstellers 16 und der Bodenwand 15c der Stellerführung 15a des Stellerabschnitts 15 des Gehäuses 11 der Ventileinheit 110 der Korrektureinrichtung 100, d.h. das verfügbare Zusatzlüftspielmaß, weist seinen Maximalwert (Abstand 19a in Fig. 8) auf.

b) In der zweiten Arbeitsstellung, die eine Maximaltemperatur bzw. einen Temperaturbereich T > 400° C betrifft, befindet sich der Hubbegrenzungssteller 16 in seinem Endanschlag, d.h. der Abstand 19 (Abstand 19c in Fig. 9) zwischen der der Aufnahme 16c gegenüberliegenden Stirnwand 16a des Hubbegrenzungsstellers 16 und der Bodenwand 15c der Stellerführung 15a des Stellerabschnitts 15 des Gehäuses 11 der Ventileinheit 110 der Korrektureinrichtung 100, d.h. das verfügbare Zusatzlüftspielmaß, ist zu Null geworden.

Das konstruktive Lüftspiel 18 (siehe Fig. 3), d.h. der Abstand zwischen der Kontaktfläche des Stößels 9 des Verschleißnachstellers 8 und dem Boden der Aufnahme 16c des Hubbegrenzungsstellers 16 der Korrektureinrichtung 100 ist der größtmögliche.

Dabei stehen weder das Eingriffsende 22e der ersten Ventilstange 22 in Eingriff mit der Hinterschneidung 16g des Hubbegrenzungsstellers 16, noch das Eingriffsende 22'e der zweiten Ventilstange 22' in Eingriff mit der anderen Hinterschneidung 16h des Hubbegrenzungsstellers 16 (siehe Fig. 9).

c) In der dritten Arbeitsstellung, die ein mittleres Temperaturniveau T bzw. einen Temperaturbereich 200° C < T < 400° C betrifft, befindet sich der Hubbegrenzungssteller 16 in einer Zwischenstellung. Das konstruktive Lüftspiel 18 (siehe Fig. 3), d.h. der Abstand zwischen der Kontaktfläche des Stößels 9 des Verschleißnachstellers 8 und dem Boden der Aufnahme 16c des Hubbegrenzungsstellers 16 der Korrektureinrichtung 100 liegt zwischen dem kleinst- und größtmöglichen Abstand. 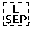

Dabei steht das Eingriffsende 22e der ersten Ventilstange 22 nicht in Eingriff mit der Hinterschneidung 16g des Hubbegrenzungsstellers 16, wobei das Eingriffsende 22'e der zweiten Ventilstange 22' in Eingriff mit der anderen Hinterschneidung 16h des Hubbegrenzungsstellers 16 steht (siehe Fig. 10).

Der Abstand 19 zwischen der der Aufnahme 16c gegenüberliegenden Stirnwand 16a des Hubbegrenzungsstellers 16 und der Bodenwand 15c der Stellerführung 15a des Stellerabschnitts 15 des Gehäuses 11 der Ventileinheit 110 der Korrektureinrichtung 100, d.h. das verfügbare Zusatzlüftspielmaß, weist einen Zwischenwert zwischen seinem Minimalwert und seinem Maximalwert auf (Abstand 19b in Fig. 10).

Der während des Betriebs dauerhaft anliegende Druck am Eingangsluftkanal 30 der Ventileinheit 110 hat insbesondere den Vorteil, dass die Arbeitsstellung des Hubbegrenzungsstellers 16 für die Funktion des Ventils (Ventilstangen 22, 22') nicht relevant ist, da sich das System bei Betätigung der Trommelbremse 1 selbst heilt.

Wenn angenommen wird, dass die Arbeitsstellung a) versagt hätte, würde in diesem Fall der Hubbegrenzungssteller 16 durch die Druckfeder (Kraftspeicherelement 17) gegen die Kontaktfläche des Nachstellers 8 gedrückt. Da die axiale Gegenkraft der Druckfeder (Kraftspeicherelement 17) jedoch nicht ausreichend ist, den Nachsteller 8 im Hub zu begrenzen, drückt dieser bei Betätigung der Trommelbremse 1 den Hubbegrenzungssteller 16 so weit in y-Richtung (Fig. 3) zurück, bis der an der ersten Ventilstange 22 anliegende Druck diese in die Hinterschneidung 16g des Hubbegrenzungsstellers 16 drückt. Die zweite Ventilstange 22' hingegen ist in Entlüftungsstellung, d.h. die Druckfeder (Feder 25 in Fig. 8) drückt diese zurück, so dass sie nicht in die Hinterschneidung 16h des Hubbegrenzungsstellers 16 einrasten kann. Somit ist nach einer Betätigung die gewünschte Ventilstellung erreicht.

Da die Ventilstangen 22, 22' bei Betätigung der Trommelbremse 1 hohen Querkräften ausgesetzt sind, sind die Ventilstangen 22, 22' entsprechend in Werkstoffwahl und Konstruktion auszugestalten.

Folgende Vorteile ergeben sich.
- Es ist mindestens ein dreistufiges Lüftspiel möglich.
- Eine Energieversorgung ist über den Druckluftanschluss der Feststellbremse möglich.
- Temperaturerfassung kann direkt an den Stellen mit dem höchsten Temperaturniveau erfolgen.
- Alternativ kann die Ventileinheit 110 über einen Temperatursensor elektrisch gesteuert ausgeführt sein.

In einer weiteren, nicht dargestellten Ausführungsvariante kann der Steuerschieber 20 zum Beispiel elektrisch oder elektromagnetisch betätigt werden. Dabei umfasst die Antriebseinheit 28 zumindest einen Temperatursensor, welcher die aktuelle Temperatur der Bremstrommel 2 erfasst, und ein elektrisches Stellglied, z.B. einen Elektromagneten, welches den Steuerschieber 20 verstellt. In einer solchen Variante weist die Antriebseinheit 28 dann eine entsprechende Steuerung auf.

Die Erfindung ist im Rahmen der beigefügten Ansprüche modifizierbar.

### Bezugszeichenliste

- 1: Trommelbremse
- 2: Bremstrommel
- 2a: Drehachse
- 2b: Raum
- 2c: Fühlerraum
- 3: Bremsträger
- 3a: Wandabschnitt
- 4: Anschluss
- 5: Versorgungsleitung
- 6: Aktuatorkolben
- 7: Keilmechanismus
- 8: Verschleißnachsteller
- 9: Stößel
- 10: Lüftspielverstellmechanismus
- 11: Gehäuse
- 12: Versorgungsabschnitt
- 13: Antriebsabschnitt
- 13a: Schieberbohrung
- 13b: Antriebsbohrung
- 14, 14': Ventilabschnitt
- 14": Stangenabschnitt
- 14a, 14'a: Bohrung
- 14a-1, 14'a-1: Montageöffnung
- 14b, 14'b: Konussitz
- 14c: Stangenraum
- 15: Stellerabschnitt
- 15a: Stellerführung
- 15b: Flansch
- 15c: Bodenwand
- 16: Hubbegrenzungssteller
- 16a: Stirnwand
- 16b: Koppelabschnitt
- 16c: Aufnahme
- 16d: Öffnung
- 16e, 16f: Seitenfläche
- 16g, 16h: Hinterschneidung
- 17: Kraftspeicherelement
- 18: Konstruktives Lüftspiel
- 19, 19a-c: Abstand
- 20: Steuerschieber
- 20a: Koppelabschnitt
- 20b, 20'b: Nut
- 20c, 20'c: Ringabschnitt
- 20d: Nut
- 21-1, 21-2: Ventilteller
- 21-3, 21-4: Ventilteller
- 21a: Ventilkonus
- 21b: Vorsprung
- 22, 22': Ventilstange
- 22a, 22'a: Stangenabschnitt
- 22b, 22'b: Bolzenabschnitt
- 22c, 22'c: Konus
- 22d, 22'd: Rotationsachse
- 22e, 22'e: Eingriffsende
- 24, 24a; 25: Feder
- 26: Gleitlagerbuchse
- 27: Kugel
- 28: Antriebseinheit
- 28a: Thermoschalter
- 28b: Leitblech
- 28c: Isolierhülse
- 28d: Schraube
- 28e: Endabschnitt
- 29: Expansionsstab
- 29a: Koppelende
- 30: Eingangsluftkanal
- 31, 31': Erster Entlüftungskanal
- 31a, 31'a: Zweiter Entlüftungskanal
- 31b, 31'b: Ventilsitz
- 32, 32a: Verbindungskanal
- 33: Auslasskanal
- 34, 34a: Steuerkanal
- 35, 35': Erster Druckkanal
- 35a, 35'a: Zweiter Druckkanal
- 35b, 35'b: Ventilsitz
- 35c, 35'c: Federaufnahme

- 100: Korrektureinrichtung
- 110: Ventileinheit

- x, y, z: Koordinaten

## Patentansprüche

1. Trommelbremse (1), insbesondere für ein Nutzfahrzeug, aufweisend
- eine um eine Drehachse (2a) drehbar gelagerte Bremstrommel (2),
- mehrere in einem Aufnahmeraum der Bremstrommel (2) gelagerte Bremsbacken mit einem jeweiligen Reibbelagträger und einem an diesem angeordneten Reibbelag,
- einen Verschleißnachsteller (8) zur Erfassung und zum Ausgleich eines vergrößerten Lüftspiels,
**gekennzeichnet durch**
- einen Lüftspielverstellmechanismus (10), welcher den Verschleißnachsteller (8) und eine mit dem Verschleißnachsteller (8) gekoppelte temperaturabhängige Korrektureinrichtung (100) umfasst, wobei die temperaturabhängige Korrektureinrichtung (100) das Lüftspiel entsprechend einer Temperatur von Komponenten der Trommelbremse (1) korrigiert.

2. Trommelbremse (1) nach Anspruch 1, **dadurch gekennzeichnet, dass** die temperaturabhängige Korrektureinrichtung (100) das Lüftspiel mit einem üblichen Wert aus einer Normalstellung des Lüftspielverstellmechanismus (10) bei normaler Temperatur von Komponenten der Trommelbremse (1) derart bei steigender Temperatur korrigiert, dass das Lüftspiel des Lüftspielverstellmechanismus (10) bei gestiegener Temperatur vergrößert ist und bei Rückgang der Temperatur wieder den üblichen Wert in der Normalstellung des Lüftspielverstellmechanismus (10) einnimmt.

3. Trommelbremse (1) nach Anspruch 2, **dadurch gekennzeichnet, dass** die temperaturabhängige Korrektureinrichtung (100) das Lüftspiel stufenweise in mindestens zwei Stufen korrigiert.

4. Trommelbremse (1) nach Anspruch 3, **dadurch gekennzeichnet, dass** die Korrektureinrichtung (100) eine Ventileinheit (110), einen Hubbegrenzungssteller (16) und eine temperaturabhängige Antriebseinheit (28) aufweist, wobei die temperaturabhängige Antriebseinheit (28) mit der Ventileinheit (110) derart zusammenwirkt, dass der Hubbegrenzungssteller (16) in Abhängigkeit von der von der Antriebseinheit (28) erfassten Temperatur der Bremstrommel (2) in Kopplung mit dem Verschleißnachsteller (8) das Lüftspiel korrigiert.

5. Trommelbremse (1) nach Anspruch 4, **dadurch gekennzeichnet, dass** die temperaturabhängige Antriebseinheit (28) eine Temperatur von Komponenten der Trommelbremse (1), insbesondere eine Temperatur der Bremstrommel (2), der Trommelbremse (1) erfasst.

6. Trommelbremse (1) nach Anspruch 4, **dadurch gekennzeichnet, dass** die Ventileinheit (110) mindestens ein Entlüftungsventil (21-1, 21-2), mindestens ein Druckventil (21-3, 21-4) und mindestens eine Ventilstange (22, 22') aufweist, wobei die mindestens eine Ventilstange (22, 22') durch das mindestens eine Entlüftungsventil (21-1, 21-2) und das mindestens eine Druckventil (21-3, 21-4) aus einer Ruheposition in eine Arbeitsposition und wieder zurück verstellbar ist.

7. Trommelbremse (1) nach Anspruch 5, **dadurch gekennzeichnet, dass** der Hubbegrenzungssteller (16) in einer Stellerführung (15a) der Korrektureinrichtung (100) in Richtung des bei Betätigung der Trommelbremse (1) sich mitbewegenden Verschleißnachstellers (8) verschiebbar geführt ist und verschiedene Positionen gesteuert durch die mindestens eine Ventilstange (22, 22') der Ventileinheit (110) in Abhängigkeit von der Temperatur der Bremstrommel (2) einnimmt.

8. Trommelbremse (1) nach Anspruch 6, **dadurch gekennzeichnet, dass** die mindestens eine Ventilstange (22, 22') aus einer Ruheposition, welche die mindestens eine Ventilstange (22, 22') durch die Kraft einer Feder (25) ohne Druckbeaufschlagung durch die Ventileinheit (110) bei einem zugehörigen geöffneten Entlüftungsventil (21-1, 21-2) der Ventileinheit (110) einnimmt, unter Druck, den ein zugehöriges geöffnetes Druckventil (21-3, 21-4) der Ventileinheit (110) bereitstellt, wobei das Entlüftungsventil (21-1, 21-2) der Ventileinheit (110) wieder geschlossen ist, in eine Arbeitsposition gedrückt ist, wenn ein Eingriffsende (22e, 22'e) in eine am Hubbegrenzungssteller (16) eingebrachte Hinterschneidung (16g, 16h) einrastet, sobald die Hinterschneidung (16g, 16h) durch Verschiebung des Hubbegrenzungsstellers (16) durch den Verschleißnachsteller (8) deckungsgleich mit der Position der mindestens einen Ventilstange (22, 22') ist.

9. Trommelbremse (1) nach Anspruch 7, **dadurch gekennzeichnet, dass** die mindestens eine Ventilstange (22, 22') aus ihrer Arbeitsposition wieder zurück in ihre Ruheposition verstellt ist, wenn das geöffnete Druckventil (21-3, 21-4) der Ventileinheit (110) geschlossen ist und das Entlüftungsventil (21-1, 21-2) der Ventileinheit (110) geöffnet ist.

10. Trommelbremse (1) nach Anspruch 7 oder 8, **dadurch gekennzeichnet, dass** die Ventileinheit (110) einen verschiebbar geführten Steuerschieber (20) aufweist, welcher von der temperaturabhängigen Antriebseinheit (28) betätigt das mindestens eine Entlüftungsventil (21-1, 21-2) und das mindestens eine Druckventil (21-3, 21-4) aus einer jeweiligen verschlossenen Stellung in eine jeweilige geöffnete Stellung und zurück verstellt.

11. Trommelbremse (1) nach Anspruch 9, **dadurch gekennzeichnet, dass** das mindestens eine Entlüftungsventil (21-1, 21-2) und das mindestens eine Druckventil (21-3, 21-4) der Ventileinheit (110) in Zusammenwirkung mit Nuten (20b, 20'b) und Ringabschnitten (20c, 20'c) des Steuerschiebers (20) verstellbar sind.

12. Trommelbremse (1) nach einem der Ansprüche 5 bis 10, **dadurch gekennzeichnet, dass** das mindestens eine Entlüftungsventil (21-1, 21-2) einen Stangenraum (14c) des Stangenventils (22, 22') in die Außenatmosphäre entlüftet, und dass das mindestens eine Druckventil (21-3, 21-4) eingangsseitig mit einem Anschluss (4) für eine Druckluftversorgung der Feststellbremse der Trommelbremse (1) verbunden ist.

13. Trommelbremse (1) nach einem der Ansprüche 8 bis 11, **dadurch gekennzeichnet, dass** die temperaturabhängige Antriebseinheit (28) mit einem Thermoschalter (28a) in Form eines Bimetallstreifens oder/und mit einem Expansionsstab (29) ausgebildet ist, wobei der Thermoschalter (28a) oder/und der Expansionsstab (29) mit dem Steuerschieber (20) gekoppelt ist/sind.

14. Trommelbremse (1) nach einem der Ansprüche 8 bis 12, **dadurch gekennzeichnet, dass** die temperaturabhängige Antriebseinheit (28) zumindest einen Temperatursensor, welcher die aktuelle Temperatur von Komponenten der Trommelbremse (1), insbesondere die aktuelle Temperatur der Bremstrommel (2), erfasst, und ein elektrisches Stellglied, z.B. einen Elektromagneten, welches den Steuerschieber (20) verstellt, und eine entsprechende Steuerung zur Verarbeitung gemessener Temperaturwerte der Bremstrommel (2) des Temperatursensors und zur Betätigung des elektrischen Stellgliedes des Steuerschiebers aufweist.
